# EUROPÄISCHE PATENTSCHRIFT

(11) **EP 3 105 291 B1**
(45) Veröffentlichungstag und Bekanntmachung des Hinweises auf die Patenterteilung: **27.12.2017**
(21) Anmeldenummer: 15710413.4
(22) Anmeldetag: 09.02.2015
(51) Int. Cl.: C08L 95/00, C08K 3/36

(54) **VERFAHREN ZUR HERSTELLUNG EINES GUMMIMODIFIZIERTEN BITUMENS**
METHOD FOR PRODUCING A RUBBER MODIFIED BITUMEN
PROCÉDÉ DE FABRICATION D'UN BITUME EN CAOUTCHOUC MODIFIÉ

(30) Priorität: 12.02.2014 EP 14405012
(43) Veröffentlichungstag der Anmeldung: 21.12.2016
(73) Patentinhaber: Rubbertec Technologie Engineering AG, 6300 Zug (CH); Rubbertec GmbH, 8940 Liezen (AT)
(72) Erfinder: OBERMEIER, Alois, 1210 Wien (AT); JUNG, Felix, 8630 Rüti (ZH) (CH)
(74) Vertreter: EGLI-EUROPEAN PATENT ATTORNEYS
(86) Internationale Anmeldenummer: PCT/CH2015/000012
(87) Internationale Veröffentlichungsnummer: WO 2015/120564

(56) Entgegenhaltungen:
- EP-A1- 0 024 513
- WO-A1-2013/132488
- DE-A1- 3 736 215
- US-A- 4 081 502
- Tl Rmb- ET AL: "Technische Lieferbedingungen für Gummimodifizierte Bitumen TL RmB-StB By", , 1. Januar 2010 (2010-01-01), XP055116914, Gefunden im Internet: URL:https://www.verkuendung-bayern.de/file s/allmbl/2010/03/anhang/913-I-1082-A001.pd f [gefunden am 2014-05-08]

## Beschreibung

### Gebiet der Erfindung

Die Erfindung betrifft ein Verfahren zur Herstellung eines gummimodifizerten Bitumens.

### Stand der Technik

Im Strassenbau bildet Bitumen als Bindemittel zusammen mit Gesteinskörnungen den Asphalt. Für die Herstellung von Asphalt werden immer häufiger Bitumina verwendet, die mit Polymeren modifiziert sind. Diese tragen den Namen polymermodifiziertes Bitumen oder kurz PmB. Durch die Zugabe von Naturkautschuk, synthetischen Polymeren oder Schwefel können die Bitumeneigenschaften deutlich beeinflusst werden. So verbessern sich je nach Zugabemenge und Zugabeart die Standfestigkeit, die Haftung an der Gesteinskörnung und die Dämpfungseigenschaften des Asphalts. Diese Bitumensorten werden daher insbesondere für Fahrbahnbeläge mit hoher Verkehrsbeanspruchung verwendet.

Gummimodifiziertes Bitumen hat gegenüber PmB den Vorteil, dass der mit diesem hergestellte Asphalt eine längere Nutzungsdauer besitzt und der mit gummimodifiziertem Bitumen hergestellte Asphalt wiederverwendbar ist. Weitere Vorteile sind dessen verbesserte Geräuschdämmung und dessen hohe Verformfestigkeit, wodurch Kornausbrüche und Rissbildungen der Asphaltdecke gemindert sind. Durch den hohen Gummianteil, welcher zu einem grossen Anteil aus Altreifen stammt, ist auch die Lärmemission solcher Asphaltdecken deutlich reduziert, da das gummimodifizierte Bitumen dämpfend wirkt.

Ein Nachteil des gummimodifizierten Bitumens (GmB) ist, dass es in einem stationären Mischwerk hergestellt werden muss und mit Tankwagen an den weiteren Verarbeitungsort transportiert werden muss. Das Bitumen ist nur beschränkt lagerfähig und muss in beheizten Tanks fliessfähig gehalten werden. Die Bevorratung mit gummimodifiziertem Bitumen an der Baustelle bzw. bei den Asphaltmischern ist daher nicht möglich oder nur mit grossem Aufwand möglich. Dementsprechend teuer ist die Zurverfügungstellung von GmB vor Ort beim Asphaltmischer.

Die US 4 081 502 A offenbart die Herstellung granularen gummimodifizierten Bitumens durch Vermischung von Elastomeren mit Bitumen, die Extrusion der Mischung auf Transportrollen und die Zerkleinerung des Gemischs, wobei eine Bepuderung mit Talk erfolgt.

Aus der DE 37 36 215 A1 ist die Herstellung schüttfähigen gummimodifizierten Bitumenguts mittels Zugabe von Kieselsäure und anschliessender Abkühlung an der Luft bekannt. Das Gut wird in Säcke abgepackt.

Die WO 2013/132488 A1 betrifft die Umhüllung von Bitumentropfen mit Bitumenpartikeln und Beschichtung der Partikeln mit Kieselgelpuder.

Die EP 0 024 513 A1 beschreibt die Herstellung pulverförmigen Bitumengranulats durch Vermischung von Bitumen und Kieselsäure, Abkühlung und Zerschlagen zu einem Pulver.

Aus TL RmB - StB By: "Technische Lieferbedingungen für Gummimodifizierte Bitumen TL RmB-StB By" vom 1. Januar 2010, XP55116914, auffindbar im Internet am 08.05.2014 unter URL:https://www.verkuendung-bayern.de/files/allmbl/2010/03/anhang/913-I-1082-A001.pdf, ist die Verpackung gummimodifizierten Bitumenguts in Säcken bekannt.

### Aufgabe der Erfindung

Aufgabe der vorliegenden Erfindung ist es, ein Verfahren vorzuschlagen, welches die Bevorratung des gummimodifiziertes Bitumens vereinfacht.

### Beschreibung der Erfindung

Erfindungsgemäss wird die Aufgabe durch ein Verfahren gelöst, bei dem zunächst wenigstens die Rohstoffkomponente Bitumen und Gummimehl in einem ersten Mischer zu gummimodifiziertem Bitumen homogenisiert werden, dass nach dem Homogenisierungsschritt das gummimodifizierte Bitumen in einem beheizten Rührbehälter abgekühlt und gelagert wird, wobei die Temperatur in dem Rührbehälter zweckmässigerweise wenigstens auf einer Temperatur gehalten wird, bei der das gummimodifizierte Bitumen fliessfähig bzw. pumpbar ist, und dass danach die Verfahrensschritte des Mischens von gummimodifiziertem Bitumen, weiterem optionalem Gummimehl, und Feststoffkomponenten in einem zweiten Mischer zu einer Fertigschmelze, der Entleerung der Fertigschmelze auf eine gekühlte Förderrinne und des Zerkleinerns zu einem Gummibitumengranulat vorgesehen sind.

Dabei wirkt der Rührbehälter in erfindungsgemässer Weise als ein Speicher, der einerseits eine fortlaufende Massenproduktion von gummimodifiziertem Bitumen in dem ersten Mischer ermöglicht und andererseits eine Abkühlung des gummimodifizierten Bitumens nach dem Homogenisierungsschritt über eine hinreichend lange Zeit erlaubt. Aus dem Rührbehälter kann dann im Weiteren die benötigte Menge an GmB jederzeit ohne Aufwand bei Bedarf aus dem Rührbehälter entnommen und dem zweiten Mischer aufgegeben werden kann. Bevorzugt beträgt die Temperatur im Rührbehälter zwischen 115°C und 140°C, da das GmB bei dieser Temperatur noch nicht zu zäh ist und höhere Temperaturen den Energieverbrauch unnötig steigern.

Die Zugabe der Feststoffkomponenenten, welche aus der Stoffgruppe der gefällten Kieselsäure sind, bewirkt ein rasches Abbinden des Granulats mit einer trockenen Oberfläche.

Die Herstellung des Granulats hat den Vorteil, dass das Granulat sehr einfach und für lange Zeit, beispielsweise direkt bei der Asphaltmischanlage oder in Verkaufslagern, bevorratet werden kann. Das Granulat sollte unter 40°C gelagert werden, da bei dieser Temperatur der Schmelzbereich des Gummibitumengranulats beginnt. Eine übliche Granulatlagerung in Säcken, Bigbags oder Bunkern ist daher für das GmB ermöglicht. Auf ein Lagern des GmB in beheizbaren Silos, wie dies gemäss dem Stand der Technik notwendig ist, kann daher verzichtet werden. Auch kann auf die aufwendige "just in time" Lieferung des GmB in beheizten Tankwägen zu der Asphaltmischanlage verzichtet werden. Von grossem Vorteil ist auch die einfache und genaue Dosierung des Granulats. So können exakt abgewogene Säcke als Dosiereinheit verwendet werden. Das Granulat muss nicht aus den Säcken entleert werden, da die Säcke aus Kunststoff sind. Die Kunststoffsäcke werden mitsamt dem Granulatinhalt der Asphaltmischanlage aufgegeben und schmelzen dort vollständig. Beispielsweise ist das Granulat in Kunststoffsäcken zu 10, 15 oder 20 kg verpackt. Die Granulatgrösse ist darauf abgestimmt, dass das Granulat rasch und vollständig in der Asphaltmischanlage aufschmelzbar ist. Das Granulat kann auch in Bigbags geliefert werden und in einem Granulatbunker gelagert werden. Auch dann ist die Dosierung mit einer Granulatdosieranlage einfach und genau durchführbar. Das Granulat kann wegen der Vor-Ort-Bevorratung jederzeit der Asphaltmischanlage zudosiert werden. Falls Granulat übrigbleibt, kann es bei einer anderen Produktion von Asphalt weiter verwendet werden. Die Abhängigkeit von GmB Lieferungen oder dem beschränkt lagerfähigen GmB aus beheizten Spezialbitumentanks, wie dies bis jetzt notwendig war, ist daher nicht mehr gegeben. Die Kosten der Bevorratung können durch das Gummibitumengranulat signifikant reduziert werden.

In einer bevorzugten Ausführungsform des Verfahrens ist bei dem Homogenisierungsschritt als weitere Rohstoffkomponente ein Fluxöl vorgesehen, das zusammen mit dem Bitumen und dem Gummimehl in dem ersten Mischer zu dem gummimodifizierten Bitumen homogenisiert wird.

In einer weiteren bevorzugten Ausführungsform des Verfahrens wird in dem zweiten Mischer der Schmelze ein Aktivator zugesetzt. Der Aktivator dient zur Geruchsneutralisation und fördert die Granulatbildung.

Zweckmässigerweise wird in dem zweiten Mischer der Schmelze Kieselsäure zugesetzt. Die Kieselsäure verhindert ein ungewolltes Verkleben des Granulats, da sie die Feuchtigkeit der Mischung aufnimmt.

Mit Vorteil wird die Fertigschmelze in Gestalt von wenigstens einem Strang, welcher durch eine Strangextrusion hergestellt wird, auf die Förderrinne aufgegeben. Zur Herstellung des Granulats kann daher auf ein ausgereiftes Verfahren zurückgegriffen werden, da die Strangextrusion nahezu bei jeder Granulatherstellung zum Einsatz kommt. Da es sich dabei um einen kontinuierlichen Prozess handelt, sind die Herstellleistungen an Granulat dementsprechend hoch.

Als vorteilhaft erweist es sich, wenn der Strang durch Mischwerkzeuge, bevorzugt durch ein rotierendes Mischwerkzeug, zu Granulatstücken gemischt wird. Diese Mischtechnik hat den Vorteil, dass die Stränge rasch und präzise in die benötigte Granulatgrösse gemischt werden können.

Dadurch, dass der Strang vorteilhaft zu Stücken mit einer Korngrösse von 1 - 1,5 mm und bevorzugt mit einer Länge von 1,2 - 1,4 mm gemischt wird, wird eine Granulatgrösse erreicht, wodurch das Granulat genau zu dosieren ist und in der Asphaltmischanlage rasch und vollständig aufschmilzt.

In einer bevorzugten Ausführungsform werden die Rohstoffkomponenten Bitumen, optionales Fluxöl und Gummimehl hintereinander in den ersten Mischer eingewogen. Durch das schrittweise Aufgeben der Komponenten lässt sich in dem ersten Mischer ein besonders homogenes GmB herstellen, bei welchem das Gummi chemisch wie physikalisch in das Bitumen eingebunden ist.

In einer weiteren, besonders bevorzugten Ausführungsform des Herstellverfahrens wird die Fertigschmelze durch wenigstens eine Düse mit einem Durchmesser zwischen 3 und 10 cm und bevorzugt zwischen 4 und 6 cm zu dem Strang extrudiert. Granulatstücke mit diesen Durchmessern können sehr genau dosiert werden, da ein Granulatstück nur wenige Gramm wiegt. Auch haben Granulatstücke mit dieser Grösse gute Schütteigenschaften und lassen sich rasch und vollständig Aufschmelzen.

Zweckmässigerweise wird in die Kunststoffsäcke zwischen 5 und 25 kg und bevorzugt zwischen 10 und 20 kg Bitumengranulat abgefüllt. Säcke mit einem solchen Gewicht können von einer Person noch gehoben werden und das Gewicht ist für eine sackweise Zudosierung in die Asphaltmischanlage nicht zu gross.

In einer weiteren bevorzugten Ausführungsform wird dem ersten und dem zweiten Mischer eine Menge Gummimehl zudosiert, sodass die Fertigschmelze zwischen 25 und 45 Gew%-. und bevorzugt zwischen 30 und 40 Gew% Gummi enthält. Die Aufteilung des Gummimehls auf die beiden Mischer ermöglicht einen hohen Gummianteil in dem GmB. Der Gummianteil von bis zu 45 Gew% in dem GmB führt zu einem Asphalt mit einem GmB-Anteil von bis zu 8 Gew%. Der Asphalt ist besonders langlebig, da er einen hohe Dauerelastizität besitz. Der hohe Gummianteil bewirkt auch eine hohe Geräuschdämpfung der Asphaltschichten und eine geringe Neigung zur Riss- uns Spurrillenbildung. Ausserdem besitzt der mit diesem GmB hergestellte Asphalt gute Griffigkeit und eine hohe Verformfestigkeit.

Mit Vorteil werden dem ersten Mischer 20% Gummimehl und dem zweiten Mischer 29% Gummimehl zugesetzt. Das Aufteilen des Gummimehlanteils auf den ersten und zweiten Mischer bewirkt eine besonders gute Verteilung. Die Zugabe eines Teils des Gummimehls in den zweiten Mischer bewirkt auch, dass das GmB in dem Rührbehälter noch gut fliessfähig ist und die Erhöhung der Feststoffkomponenten zur Granulatherstellung erst später in dem zweiten Mischer erfolgt.

Bevorzugt beträgt die Temperatur im zweiten Mischer zwischen 70 °C und 95°C. Dieser Temperaturbereich bewirkt die Herstellung einer homogenen Fertigschmelze, welche sich gut weiterverarbeiten lässt und auf der Förderrinne rasch abgekühlt werden kann. Hierzu kann der zweite Mischer mitunter aktiv gekühlt werden, da das gummimodifizierten Bitumen aus dem beheizten Rührbehälter zunächst noch eine Temperatur zwischen 115°C und 140°C aufweist.

Weitere Vorteile und Merkmale ergeben sich aus der nachfolgenden Beschreibung eines Ausführungsbeispiels der Erfindung unter Bezugnahme auf die schematischen Darstellungen.

Es zeigen in nicht massstabsgetreuer Darstellung:

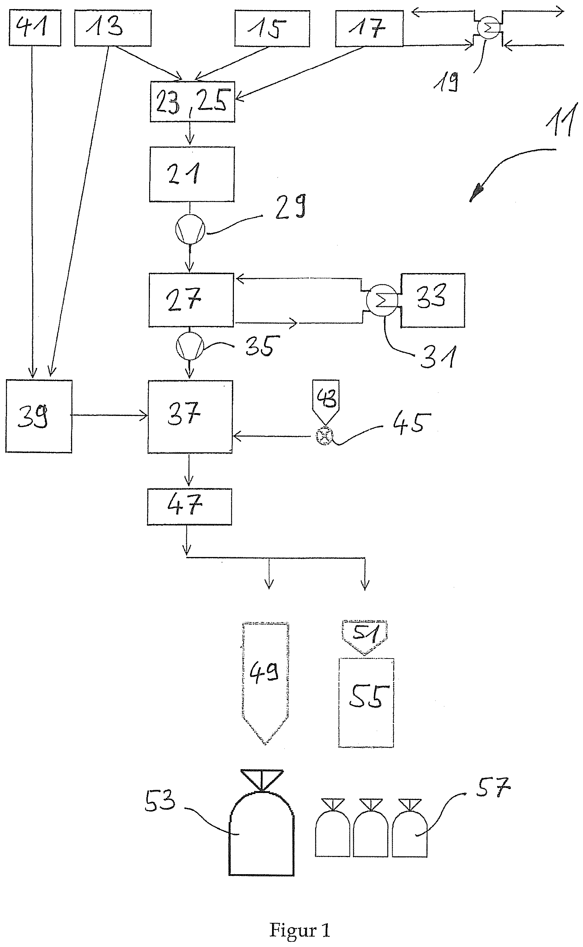

- Figur 1:: Fliessschema des erfindungsgemässen Herstellungsverfahrens;

In Figur 1 ist das Fliessschema des erfindungsgemässen Verfahrens zur Herstellung eines gummimodifizierten Bitumens (GmB) dargestellt. Das Gesamtverfahren trägt die Bezugsziffer 11. Das Verfahren zeichnet sich dadurch aus, dass damit GmB in Granulatform hergestellt werden kann. In einem ersten Schritt wird Gummimodifiziertes Bitumen hergestellt. Dazu werden Gummimehl aus einem Silo 13 und Bitumen und Fluxöl aus Lagertanks 15 bzw. 17 entnommen. Das Gummimehl ist vollständig oder grösstenteils aus rezyklierten Altreifen hergestellt. Es handelt sich bei dem Gummimehl daher bevorzugt um eine feingranulierte vulkanisierte Kautschukmischung. Die Lagertanks 15,17 sind mittels eines ersten Wärmetauschers 19 beheizt, damit Bitumen und Fluxöl fliessfähig und pumpbar sind. Das Bitumen wird auf einer Temperatur von etwa 180 °C und die Fluxöl auf etwa 80 °C gehalten. Bitumen wird wegen der leichteren Verarbeitbarkeit und Fliessfähigkeit gefluxt. Die Rohstoffkomponenten werden hintereinander in einen ersten Mischer 21 aufgegeben. Zuerst wird das Bitumen über eine Waage 23 für Flüssigkeiten in den ersten Mischer aufgegeben. Das Fluxöl wird in den ersten Mischer 21 ebenfalls über die Waage 23 in den ersten Mischer gepumpt. Damit die Rohstoffkomponenten im ersten Mischer vollständig homogenisiert werden können, wird das Gummimehl über ein erstes Dosier- und Waagesystem 25 für Feststoffe innerhalb von 30 Sekunden dem ersten Mischer 21 zugeführt. Die Homogenisierung der Rohstoffkomponenten führt dazu, dass das Gummimehl sowohl chemisch als auch physikalisch in das Bitumen eingebunden ist. Der erste Mischer wird bei etwa 215 °C betrieben. Denkbar ist mitunter, dass das Gummimehl portionsweise in mehreren, vorzugswiese vier einzelnen, aufeinanderfolgenden Zugabeschritten zugeben wird. Nach jeder einzelnen Zugabe kühlt die Mischung kurzzeitig ab und wird dann wieder auf die Temperatur im ersten Mischer aufgeheizt.

Das GmB wird von einer ersten Pumpe 29 bei einer Temperatur von etwa 210°C bis 215°C in einen Rühr-Kühlbehälter 27 gepumpt. Über ein Thermoöl, welches mittels eines zweiten Wärmetauschers 31 thermisch mit einem Kühlturm 33 in Verbindung steht, wird das GmB auf 115°C bis 140°C gekühlt. Das GmB wird nach dem Abkühlprozess in dem Rühr-Kühlbehälter 27 gelagert. Damit ist der erste Teil des Herstellungsprozesses abgeschlossen und das GmB steht zur weiteren Verarbeitung bereit. Es versteht sich, dass das GmB in mehreren Rühr-Kühlbehältern chargenweise zur Verfügung stehen kann, um einen möglichst kontinuierlichen Herstellprozess zu ermöglichen.

In einem zweiten Schritt des Herstellungsprozesses wird aus dem GmB das Gummibitumengranulat hergestellt. Das pumpbare GmB wird mit einer zweiten Pumpe 35 via einen Durchflusszähler dem zweiten Mischer 37 zugeführt. Aus dem Gummimehlsilo 13 wird weiteres Gummimehl über ein zweites Dosier-und Waagesystem 39 dem zweiten Mischer 37 zugeführt. Die Feststoffkomponenten, welche bewirken, dass das GmB zu einem Granulat verarbeitet werden kann, werden ebenfalls über das zweite Dosier- und Waagesystem 39 in den zweiten Mischer 37 aus Silos 41 befördert, unter Zugabe von gefällter Kieselsäure mit ölbindender Wirkung. Ein Aktivator wird aus einem Lagerbehälter 43 und eine Zellradschleuse in den zweiten Mischer 37 zudosiert unter Zugabe von Aktivkohle zur geruchshemmenden Wirkung und Förderung der Granulatbildung. In den zweiten Mischer 37 wird Kieselsäure zudosiert, welche die Feuchtigkeit des GmB aufnimmt. Die Kieselsäure verhindert daher ein Zusammenkleben des Gummibitumengranulats. Nach einem innigen Mischvorgang wird das GmB auf eine Kühl-Förderrinne 47 entleert. Bevorzugt wird das GmB durch Düsen extrudiert und die dabei entstehenden Stränge erstarren auf der Kühl-Förderrinne 47. Die Stränge können durch ein rotierendes Mischwerkzeug zur gewünschten Granulatgrösse gemischt werden. Übliche Granulatkörner haben einen Durchmesser von 0,5 bis 10 mm. Das Gummibitumengranulat wird in einem Puffersilo 49 oder in einem Vorratsbunker 51 zwischengelagert. Das Granulat ist durch die Feststoffkomponenten und den Aktivator unbegrenzt lagerfähig ohne zusammenzubacken oder zu verkleben. Es kann jederzeit aus dem Puffersilo 49 in Bigbags 53 abgefüllt werden oder in einer Sackabfüllanlage 55 in Säcke 57 abgefüllt werden.

Das erfindungsgemässe Herstellverfahren ermöglicht die Herstellung von gummimodifiziertem Bitumen in Granulatform.

GmB ist gemäss dem Stand der Technik eine hochviskose Flüssigkeit, welche ständig erhitzt werden muss, um förderbar, insbesondere pumpbar zu bleiben. Die Bevorratung des GmB ist daher äusserst aufwendig, da dieses nur wenige Tage in speziellen beheizbaren Bitumentanks gelagert werden kann. Ist ein solcher Bitumentank am Ort der Aspahltmischanlage nicht vorhanden, so muss das GmB mit beheizten Tankwägen just in time angeliefert werden.

Die Herstellung eines trockenen Granulats aus einem üblicherweise hochviskosen GmB erleichtert die Lagerhaltung und Dosierung signifikant. Dazu ist es notwendig, das in einem ersten Mischer hergestellte GmB in einem zweiten Mischer mit Fest- bzw. Füllstoffen, einem Aktivator und Kieselsäure zu mischen. Dadurch lässt sich das Produkt in ein Granulat mit einer trockenen nicht klebenden Oberfläche überführen. Das Granulat ist schüttbar und besitzt eine Lagerfähigkeit von vielen Monaten bei Temperaturen unter 40 °C. Das Granulat kann in Säcke, bevorzugt in der Asphaltmischanlage schmelzende Kunststoffsäcke, Bigbags oder Silos verpackt werden.

## Patentansprüche

1. Verfahren (11) zur Herstellung eines gummimodifizierten Bitumens umfassend die Verfahrensschritte
a) Homogenisieren der Rohstoffkomponenten
- Bitumen
- Gummimehl
in einem ersten Mischer (21) zu gummimodifiziertem Bitumen,
b) Abkühlen und Lagern des gummimodifizierten Bitumens nach dem Homogenisierungsschritt in einem beheizten Rührbehälter (27), wobei die Temperatur in dem Rührbehälter (27) wenigstens auf einer Temperatur gehalten wird, bei der das gummimodifizierte Bitumen fliessfähig bzw. pumpbar ist,
c) Mischen von
- gummimodifiziertem Bitumen,
- weiterem optionalen Gummimehl und
- Feststoffkomponenten
in einem zweiten Mischer (37) zu einer Fertigschmelze,
c) Entleerung der Fertigschmelze auf eine gekühlte Förderrinne (47) und
d) Zerkleinern zu einem Gummibitumengranulat.

2. Verfahren nach Anspruch 1, **dadurch gekennzeichnet, dass** bei dem Homogenisierungsschritt als weitere Rohstoffkomponente Fluxöl vorgesehen ist, das zusammen mit dem Bitumen und dem Gummimehl in dem ersten Mischer (21) zu dem gummimodifizierten Bitumen homogenisiert wird.

3. Verfahren nach einem der voranstehenden Ansprüche, **dadurch gekennzeichnet, dass** das Gummibitumengranulat in Bigbags oder Kunststoffsäcke abgefüllt wird.

4. Verfahren nach einem der voranstehenden Ansprüche, **dadurch gekennzeichnet, dass** in dem zweiten Mischer (37) der Schmelze ein Aktivator zugesetzt wird.

5. Verfahren nach einem der voranstehenden Ansprüche, **dadurch gekennzeichnet, dass** in dem zweiten Mischer (37) der Schmelze Kieselsäure zugesetzt wird.

6. Verfahren nach einem der voranstehenden Ansprüche, **dadurch gekennzeichnet, dass** die Fertigschmelze in Gestalt von wenigstens einem Strang, welcher durch eine Strangextrusion hergestellt wird, auf die Förderrinne (47) aufgegeben wird.

7. Verfahren nach Anspruch 6, **dadurch gekennzeichnet, dass** der Strang durch ein Mischwerkzeug, bevorzugt durch ein rotierendes Mischwerkzeug, zu Granulatstücken gemischt wird.

8. Verfahren nach einem der Ansprüche 6 oder 7, **dadurch gekennzeichnet, dass** der Strang zu Stücken mit einer Korngrösse von 1 - 1,5 mm und bevorzugt mit einer Länge von 1,2 - 1,4 mm gemischt wird.

9. Verfahren nach einem der Ansprüche 6 bis 8, **dadurch gekennzeichnet, dass** die Fertigschmelze durch wenigstens eine Düse mit einem Durchmesser zwischen 3 und 10 cm und bevorzugt zwischen 4 und 6 cm zu dem Strang extrudiert wird.

10. Verfahren nach einem der voranstehenden Ansprüche, **dadurch gekennzeichnet, dass** die Rohstoffkomponenten Bitumen, optionales Fluxöl und Gummimehl hintereinander in den ersten Mischer (21) eingewogen werden.

11. Verfahren nach einem der Ansprüche 3 bis 10, **dadurch gekennzeichnet, dass** in die Kunststoffsäcke zwischen 5 und 25 kg und bevorzugt zwischen 10 und 20 kg Bitumengranulat abgefüllt wird.

12. Verfahren nach einem der voranstehenden Ansprüche, **dadurch gekennzeichnet, dass** dem ersten und dem zweiten Mischer (21,37) eine Menge Gummimehl zudosiert wird, sodass die Fertigschmelze zwischen 25 und 45 Gew% und bevorzugt zwischen 30 und 40 Gew% Gummi enthält.

13. Verfahren nach einem der voranstehenden Ansprüche, **dadurch gekennzeichnet, dass** dem ersten Mischer (21) 20% Gummimehl zugesetzt werden und dem zweiten Mischer (37) 29% Gummimehl zugesetzt werden.

14. Verfahren nach einem der voranstehenden Ansprüche, **dadurch gekennzeichnet, dass** die Temperatur im zweiten Mischer (37) zwischen 70°C und 95°C beträgt.

15. Verfahren nach einem der voranstehenden Ansprüche, **dadurch gekennzeichnet, dass** die Temperatur im Rührbehälter (27) zwischen 115°C und 140°C beträgt.

## Claims

1. Method (11) for producing a rubber-modified bitumen comprising the process steps of
a) homogenising the raw material components
- bitumen
- rubber flour
in a first mixer (21) to prepare rubber-modified bitumen,
b) cooling and storing the rubber-modified bitumen in a heated stirring tank (27) after the homogenisation step, wherein the temperature in the stirring tank (27) is maintained at least at a temperature at which the rubber-modified bitumen is flowable and can be pumped,
c) mixing
- rubber-modified bitumen,
- further optional rubber flour and
- solid components
in a second mixer (37) to prepare a finished melt,
d) emptying the finished melt onto a cooled conveyor trough (47) and
e) comminuting the product to create rubber bitumen granules.

2. Method according to Claim 1, **characterized in that** flux oil is provided as a further raw material component in the homogenisation step, and is homogenised in the first mixer (21) together with the bitumen and the rubber flour to prepare the rubber-modified bitumen.

3. Method according to anyone of the preceding claims, **characterized in that** the rubber-bitumen granulate is packed in flexible intemediate bulk containers or plastic sacks.

4. Method according to any one of the preceding claims, **characterized in that** an activator is added to the melt in the second mixer (37).

5. Method according to any one of the preceding claims, **characterized in that** silica is added to the melt in the second mixer (37).

6. Method according to any one of the preceding claims, **characterized in that** the finished melt is deposited on the conveyor trough (47) in the form of at least one strand, which is produced by strand extrusion.

7. Method according to Claim 6, **characterized in that** the strand is mixed to form granulate pieces by a mixing tool, preferably a rotating mixing tool.

8. Method according to either of Claims 6 or 7, **characterized in that** the strand is mixed to produce pieces having a grain size of 1 - 1.5 mm and preferably having a length of 1.2 - 1.4 mm.

9. Method according to any one of Claims 6 to 8, **characterized in that** the finished melt is extruded through at least one die with a diameter between 3 and 10 cm and preferably between 4 and 6 cm to create the strand.

10. Method according to any one of the preceding claims, **characterized in that** the raw material components bitumen, optional flux oil and rubber flour are weighed into the first mixer (21) one after the other.

11. Method according to any one of Claims 3 to 10, **characterized in that** the plastic sacks are filled with between 5 and 25 kg, preferably between 10 and 20 kg bitumen granulate.

12. Method according to any one of the preceding claims, **characterized in that** a quantity of rubber flour is added in measured amounts to the first and second mixers (21, 37), such that the finished melt contains between 25 and 45 wt%, and preferably between 30 and 40 wt% rubber.

13. Method according to any one of the preceding claims, **characterized in that** 20% rubber flour is added to the first mixer (21) and 29% rubber flour is added to the second mixer (37).

14. Method according to any one of the preceding claims, **characterized in that** the temperature in the second mixer (37) is between 70 °C and 95 °C.

15. Method according to any one of the preceding claims, **characterized in that** the temperature in the stirring tank (27) is between 115 °C and 140 °C.

## Revendications

1. Procédé (11) destiné à fabriquer un bitume modifié par caoutchouc, comprenant les étapes de procédé :
a) de l'homogénéisation des composantes de la matière première
- bitume
- poudre de caoutchouc
dans un premier mélangeur (21) en un bitume modifié par caoutchouc,
b) du refroidissement et du stockage du bitume modifié par caoutchouc après l'étape d'homogénéisation dans un récipient de brassage (27) chauffé, la température dans le récipient de brassage (27) étant maintenue au moins à une température à laquelle le bitume modifié par caoutchouc est fluide ou pompable,
c) du mélange
- du bitume modifié par caoutchouc,
- de poudre de caoutchouc supplémentaire en option et
- de composants solides
dans un deuxième mélangeur (37) en une masse fondue finie,
d) du vidage de la masse fondue finie sur une gouttière transporteuse (47) refroidie et
e) du broyage en granulés de bitume caoutchouté.

2. Procédé selon la revendication 1, **caractérisé en ce que** lors de l'étape d'homogénéisation, il est prévu en tant que composant de matière première supplémentaire une huile de fluxage que l'on homogénéise ensemble avec le bitume et la poudre de caoutchouc dans le premier mélangeur (21), pour obtenir le bitume modifié par caoutchouc.

3. Procédé selon l'une quelconque des revendications précédentes, **caractérisé en ce qu'**on remplit des bigbags ou des sacs en matière plastique avec les granulés de bitume caoutchouté.

4. Procédé selon l'une quelconque des revendications précédentes, **caractérisé en ce que** dans le deuxième mélangeur (37), on ajoute un activateur à la masse fondue.

5. Procédé selon l'une quelconque des revendications précédentes, **caractérisé en ce que** dans le deuxième mélangeur (37), on ajoute de l'acide silique à la masse fondue.

6. Procédé selon l'une quelconque des revendications précédentes, **caractérisé en ce qu'**on répand la masse fondue finie sur la gouttière transporteuse (47) sous la conformation d'au moins une barre, que l'on produit par coulée continue.

7. Procédé selon la revendication 6, **caractérisé en ce qu'**on mélange la barre en pièces granulées par un outil mélangeur, de préférence par un outil mélangeur rotatif.

8. Procédé selon l'une quelconque des revendications 6 ou 7, **caractérisé en ce qu'**on mélange la barre en pièces d'une grosseur de grains de 1 à 1, 5 mm et de préférence, d'une longueur de 1, 2 à 1, 4 mm.

9. Procédé selon l'une quelconque des revendications 6 à 8, **caractérisé en ce qu'**on extrude la masse fondue finie par au moins une filière d'extrusion d'un diamètre compris entre 3 et 10 cm et de préférence, entre 4 et 6 cm, pour obtenir la barre.

10. Procédé selon l'une quelconque des revendications précédentes, **caractérisé en ce qu'**on pèse les composants de matière première bitume, huile de fluxage et poudre de caoutchouc successivement dans le mélangeur (21).

11. Procédé selon l'une quelconque des revendications 3 à 10, **caractérisé en ce qu'**on remplit les sacs en matière plastique avec entre 5 et 25 kg et de préférence, entre 10 et 20 kg de granulés de bitume.

12. Procédé selon l'une quelconque des revendications précédentes, **caractérisé en ce qu'**on dose dans le premier et dans le deuxième mélangeurs (21, 37) une quantité de poudre de caoutchouc, de telle sorte que la masse fondue finie contienne entre 25 et 45 % en poids et de préférence, entre 30 et 40 % en poids de caoutchouc.

13. Procédé selon l'une quelconque des revendications précédentes, **caractérisé en ce qu'**on ajoute au premier mélangeur (21) 20% de poudre de caoutchouc et au deuxième mélangeur (37) 29% de poudre de caoutchouc.

14. Procédé selon l'une quelconque des revendications précédentes, **caractérisé en ce que** la température dans le deuxième mélangeur (37) est comprise entre 70°C et 95°C.

15. Procédé selon l'une quelconque des revendications précédentes, **caractérisé en ce que** la température dans le récipient de brassage (27) est comprise entre 115°C et 140°C.
